# EUROPEAN PATENT APPLICATION

(11) **EP 1 420 376 A1**
(43) Date of publication of application: **19.05.2004**
(21) Application number: 02079800.5
(22) Date of filing: 14.11.2002
(51) Int. Cl.: G08B 13/16, G01S 15/52, B60R 25/10

(54) **Combined alarm sensor and occupant detector**

(71) Applicant: Ford Global Technologies, Inc., Dearborn, MI 48126-2490 (US)
(72) Inventor: Svedoff, Göran, 427 37 Billdal (SE); Nilsson, Stefan, 418 75 Göteborg (SE); Henning, Karin, 414 59 Göteborg (SE)
(74) Representative: Inger, Lars Ulf Bosson

(57) **Abstract**

A motion detector comprising a transmitter (3), arranged to transmit ultrasonic waves into a defined space, where a receiver (9) is arranged to receive said waves after reflection. The motion detector comprises a detector arrangement (10, 11, 12, 13, 14, 15, 17, 18, 19), connected to said receiver (3), arranged to detect said waves after reflection. The detector arrangement (10, 11, 12, 13, 14, 15, 17, 18, 19) has in turn an arrangement (13, 14, 15, 17, 18, 19) for filtering at least two signals (16, 20) based on changes in said waves after reflection, where each detected signal (16, 20) is representative of a specific motion type in said defined space, where said motions are preferably generated by an occupant and/or an intruder.

## Description

### Field of Invention

The present invention relates to a motion detector, especially to a combined intrusion and occupation detector. More specifically the invention relates to a motion detector for a combined detection of intrusions and occupations of a defined space, such as the interior of a vehicle. The detection is especially based on Doppler effects on transmitted ultrasonic waves or microwaves. The invention also relates to a method for the same.

### Background of the invention

It is known to detect an intrusion in a vehicle, i.e. an unpermitted entrance into the vehicle, by using glass-breaking sensors, or simply by using the vehicle's existing electrical system, e.g. by using the switch that turns on the interior light when a vehicle door is opened. Such simple intrusion detectors have a tendency to be relatively cheap, since they do not need expensive sensors. On the other hand they may need a more extensive and costly cable work to be installed, compared to other more advanced detectors. Further, the simpler intrusion detectors may not offer full protection. For example, intrusions may take place without glass breaking or opening of a vehicle door. Above all, the simpler intrusion detectors are not design to sense if the vehicle interior is occupied, e.g. if a person is hiding in the vehicle.

More advanced detection methods are known. Especially, it is known to base the detection of a vehicle intrusion on ultrasonic sound waves or microwaves, which are transmitted in the interior of the vehicle. Typically, such systems receive the waves reflected from the interior surroundings, demodulate them, pass them through a band pass filter, integrate the band-passed signal, and compare the result with a predefined threshold value. If the threshold is exceeded, a signal is passed to a unit responsible for giving off an alarm. The demodulation is often based on the Doppler effect. Such known advanced methods are designed to detect an intrusion, i.e. an unpermitted entrance into the vehicle. In other words, neither said simpler nor said advanced methods are design to sense if the vehicle interior is occupied, e.g. if a person is hiding in the vehicle.

However, there are known methods for detecting if an occupant is hiding in the interior of a vehicle. The patent application DE 100 20 508 A1 describes an arrangement, which detects an occupant hiding in the vehicle luggage compartment by using a carbon dioxide sensor for sensing the carbon dioxide that is exhausted by the occupant. The detection method presupposes a concentration of carbon dioxide that exceeds a certain level, which is not necessarily the case e.g. if the vehicle interior has a good ventilation. Another possible method to detect an occupant is to use an infrared sensor, however this method may be uncertain if sunlight or other infrared sources can be seen from the interior of the vehicle, e.g. through the vehicle windows. Further, the method normally presupposes that the infrared sensor has a free line-of-sight to the occupant, which imposes restrictions on the placement of the sensor and/or may demand several sensors. Still another possible method is to use an accelerometer for measuring movements, which an occupant imposes on the vehicle body. However this method may also be uncertain due to exterior influences, which moves the vehicle body e.g. from contact with other vehicles or persons passing the vehicle. Further, if an occupant is rather still in the vehicle the occupant may not be detected by the accelerometer, since small movements may leave the vehicle body unaffected. For example, simple arm or head movements may not affect the vehicle body.

To summarise, known detectors are either designed to detect an intrusion into a defined space, or to detect if the space is occupied. In other words, according to prior art two different kinds of detectors are needed to detect an intrusion into a defined space and to detect an occupation of the same space. Further, known systems for detecting an occupation of a defined space has various drawbacks. Consequently, there is a need for an improved detector and an improved method for detecting intrusions into a defined space and detecting if the space is occupied.

### Summary of the invention

The object of the present invention is to provide a motion detector which overcomes the problems mentioned above, and which makes it possible to detect an intrusion into a defined space as well as detect if the defined space is occupied. A further object of the invention is to provide a motion detector that detects at least two different motion types in the defined space. These and other objects are achieved by a motion detector according to claim 1 and a method according to claim 10.

When using a detector according to the invention, waves are transmitted into a defined space, and reflected back to a receiver (sensor), where the reflected waves are processed to obtain at least two signals corresponding respectively to any change caused by at least two different motions types in the defined space.

The detector comprises signal processing means, arranged to process and analyse said signals in order to securely determine if the defined space is intruded and/or occupied. The processor may be a micro controller, a digital signal processor or another suitable controller or processor, possible of a previously known type. The processing may in turn be of any suitable type, possibly of a previously known kind, which is typically dependent on a satisfactory signal/noise-ratio in order to perform the analysis. Even if extreme weather conditions or traffic noise result in high signal levels, the resulting detected signals can be detected by utilising advanced algorithms.

The waves that are transmitted into the defined space may be any type of waves, which can be carried by the medium filling the space. In the normal case of an air filled space, possible wave types include sound waves and electromagnetic waves (e.g. ultrasonic waves and microwaves).

In one embodiment of the invention, primarily intended for use in connection with a vehicle, the waves are preferably ultrasonic waves. Ultrasonic waves have the advantage of an even distribution in the vehicle interior at the same time as the vehicle walls and windows confine the waves, whereas microwaves are not necessarily confined in the same way. Also, at least compared to microwaves, ultrasonic waves have a lower frequency, which facilitates a detection of any change in the reflected waves caused by an intruder or an occupier. On the other hand, when microwaves are used the microwave transmitter generates a well-defined wave field, which makes a good detection possible in the defined space. Further, the detection of a reflected microwave is undisturbed by air movements, e.g. caused by an open window. However, the microwave field must be carefully adjusted to fit the vehicle interior. Otherwise, movements outside a window or similar may be unintentionally detected.

In one embodiment of the invention the detection is based on Doppler effects. Intrusion detectors for vehicles as well as other types of motion detectors often use this technique. Doppler effects can be utilized in connection with ultrasonic waves as well as in connection with microwaves. An advantage with using Doppler effects is that the geometric form of the surveyed space is less influential on the result. This is especially advantageous when surveying motions in a vehicle interior, since vehicles typically have a complex interior geometry. A detection of Doppler effects can be based on a continuous as well as a pulsed transmission of waves.

In one embodiment of the invention the detection of a Doppler effect can be performed with an envelope demodulator. This method utilizes the fact that the sum of two or more reflected waves received in a certain point changes depending on the distance to the reflecting object or objects. For example, two reflected waves received by a receiver arranged in a certain position may cancel each other in that position, i.e. the resulting amplitude is zero. However, the waves may not cancel each other depending on the reflecting environment, i.e. the resulting amplitude may be higher than zero. Actually, the waves may even add to each other in said position, i.e. the resulting amplitude may even be greater than any single reflecting wave. This is due to the fact that the reflected waves may have different phase at the receiving position, depending on how the particular wave has been reflected. However, the sum of two or more received reflected waves is always constant in a certain receiving position as long as the reflecting environment is unchanged. On the other hand, a movement in the reflecting environment will cause a change of phase in the reflected waves. This will in turn cause a change in the resulting amplitude from the received reflected waves, received by a receiver arranged in a certain position.

Hence, when an intruder or an occupant moves in a surveyed space this will result in an amplitude modulation of the received reflected waves, which can be detected by an envelope demodulator. An envelope demodulation of the reflected waves has the advantage of being phase- and frequency independent, i.e. time synchronization of the transmitted and the received waves is not crucial. This in turn results in a greater freedom in placing the receiver in the surveyed space, which is advantage in connection with movement detectors in a vehicle, since it makes a more compact design possible.

Detection of a Doppler effect can also be performed using a time discriminating detection method. Such a method may e.g. utilize the fact that the frequency of a reflected wave changes depending on the speed of the reflecting object. Hence, when an intruder or an occupant moves in the surveyed space this will result in a frequency modulation of the received reflected wave. A movement towards the receiver (sensor) will result in an increased frequency in the received reflected wave, whereas a movement away from the receiver (sensor) will result in a decreased frequency in the received reflected wave. However, time discrimination methods may demand a time synchronisation of the transmitted and the receiver, which could be a disadvantage in connection with surveillance of a vehicle interior, since this e.g. may lead to a more complex implementation and/or impose restrictions on the freedom in placing the transmitter and receiver.

The detector according to the present invention is primarily intended for surveillance of the interior of a vehicle, such as a car, van, truck etc. However, a detector according to the invention can in principle be adapted to any type of alarm system where there is a need to detect an intrusion into a defined space as well as detect if the defined space is occupied.

The detector arrangement as described above makes it possible to use one combined detector arrangement for detecting an intrusion into a defined space as well as detecting if the defined space is occupied. Further advantages will appear from the following detailed description of the invention.

### Brief description of the drawings

A preferred embodiment of the present invention will now be described in more detail, with reference to the accompanying drawings.

Fig. 1 shows a block diagram of a motion detector system according to a first embodiment of the present invention.

Fig. 2 shows a block diagram of a motion detector system according to a second embodiment of the present invention.

Fig. 3 shows a schematic view of a car equipped with a motion detector according to the invention.

### Detailed description of preferred embodiments of the invention

As there is a need for an improved detector and an improved method, which can detect intrusions into a defined space as well as detect if the space is occupied, a preferred embodiment of such a detector and such a method will be described in more detail below. Said embodiment is more specifically related to a motion detector arranged in a vehicle, where the detector is a combined detector for detecting an intrusion into the vehicle as well as detecting if the vehicle is occupied.

The preferred detector uses Doppler effects on reflected ultrasonic waves to detect an intrusion into the vehicle as well as detecting if the vehicle is occupied. However, as was mentioned above, the invention is not limited to ultrasonic waves or to a use in vehicles. Rather, the invention is applicable to any type of alarm system where there is a need to detect an intrusion into a defined space as well as detect if the defined space is occupied.

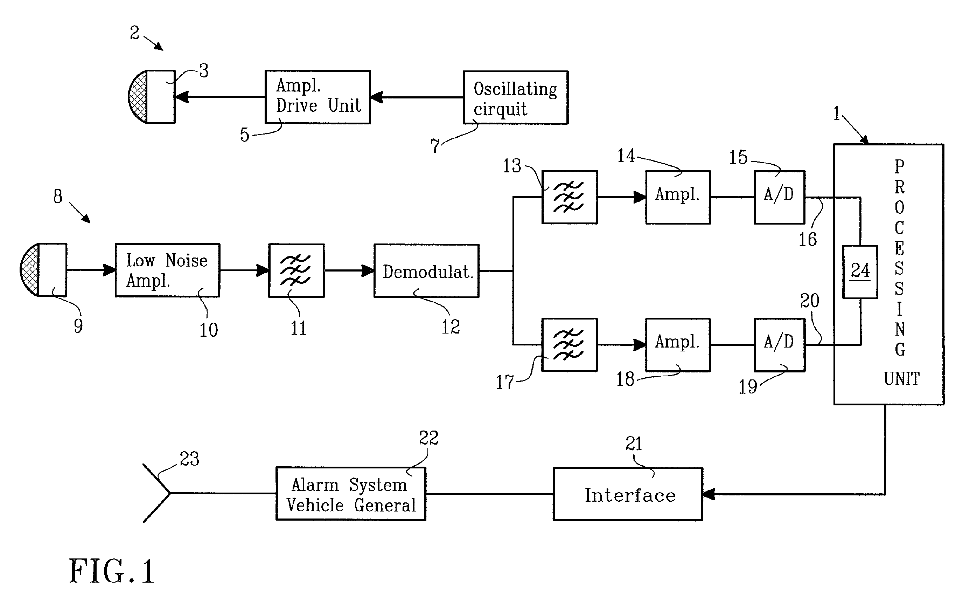

Referring to fig. 1, the signal processing of the motion detector is preferably controlled by a processor unit (PU) 1, e.g. a PIC16-series microprocessor from Microchip Technology INC. In the transmitter chain 2, a transmitter 3 is arranged to generate an ultrasonic wave of a well-defined frequency. The transmitter 3 is preferably a piezoelectric transmitter driven by an amplifying drive unit 5, which supplies the transmitter 3 with an amplified continuous 40 kHz square-wave or sinus-wave. This frequency is suitable for air filled spaces, like the interior of a vehicle. The amplifying drive unit 5 receives the continuous wave from an oscillating circuit 7, e.g. a standard crystal oscillator. Alternatively, said amplifying drive unit 5 may receive said continuous wave from the PU 1, e.g. using a suitable multiple of the PU clock signal.

In the receiver chain 8, a receiver 9 is arranged to receive the ultrasonic waves generated by the transmitter 3, after reflection against the walls and objects of the vehicle interior, including a possible intruder or occupant. The receiver 3 is preferably a piezoelectric microphone from which the received signal is supplied to a low-noise amplifier 10, in turn connected to a band pass filter 11. The band pass filter 11 is preferably a second order band pass filter with a centre frequency corresponding to the chosen transmitting frequency (in the present example 40 kHz). The filtered signal from the band pass filter 11 is supplied to an envelope demodulator 12, and further to a fist and a second sharp Doppler band pass filters 13, 17. The Doppler band pass filters 13, 17 are preferably fourth order band pass filters.

The first Doppler filter 13 has cut-of frequencies at around 30 Hz and 300 Hz and the second Doppler filter 17 has cut-of frequencies at around 1 Hz and 30Hz. The cut-off frequencies of said first Doppler filter 13 are typically representative of frequencies generated by motions from an intruder entering the vehicle, i.e. such motions will amplitude modulate the reflected ultrasonic waves with frequencies in the range of 30-300 Hz. The cut-off frequencies of said second Doppler filter 17 are typically representative of frequencies generated by motions from an occupant hiding in the vehicle, i.e. such motions will amplitude modulate the reflected ultrasonic waves with frequencies in the range of 1-30 Hz.

Amplifiers 14 and 18 then amplify the signals from the Doppler band pass filters 13 and 17 respectively, to obtain a desired signal-to-noise ratio. The signals from amplifier 14 and 18 are then converted by the A/D-converters 15 and 19 respectively, before they are supplied to the PU 1 for further signal processing. The fastest motion to be detected determines the sampling rate in the A/D-converters. The fastest motions to be detected in this embodiment will amplitude modulate the received reflected waves with a frequency around 300 Hz. This means that the sampling rate should be at least 600 Hz, i.e. it should be at least twice as high as the highest modulating frequency.

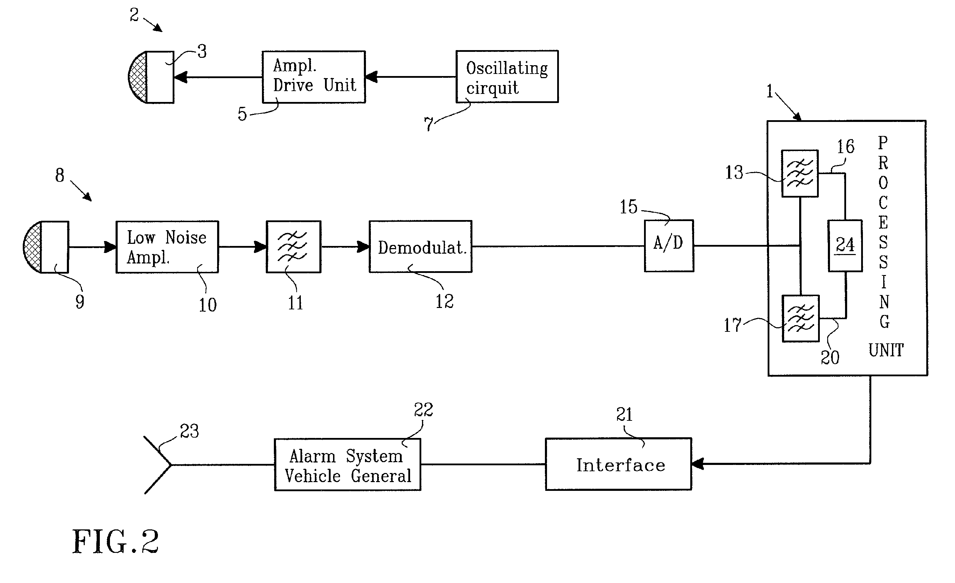

The Doppler filters 13 and 17 described in connection with fig. 1 are schematically arranged as two separate analogue units. However, as shown in fig 2 the two Doppler filters may alternatively be implemented as separate digital filters, arranged after the A/D-converter. Such Doppler filters may be implemented in hardware, e.g. by a suitably integrated circuitry.

Another alternative, as shown in fig. 2, is to supply the signal from the envelope demodulator 12 directly to an A/D-converter 15, possibly via an pre-amplifier (not shown), and the supplying the digital signal from the A/D-converter 15 to the processing unit, in which case the Doppler band pass filters 13, 17 are implemented by software running in the PU 1. Implementing said Doppler filters in the PU 1 facilitates a more compact design, which can be advantageous e.g. when the installation space is limited. On the other hand, such an implementation demands more processing power from PU 1, which may increase the cost.

In addition to a possible Doppler filtering function the processing unit PU 1 is provided with signal processing means 24, preferably implemented as software programs. Said signal processing means are arranged to perform signal processing on the digital and Doppler-filtered intrusion signal 16 and occupation signal 20. The signal processing in PU 1 is preformed in order to securely determine whether the intrusion signal 16 and/or the occupation signal 20 represent an intrusion or an occupation respectively. The algorithms employed in this processing can be of various types, and do not form part of the present invention.

In addition the processing unit PU 1 is connected a general alarm system of the vehicle 22 through an interface 21. Thus any detected intrusion or occupation can easily be communicated to the vehicle general alarm system 22 for further processing, e.g. an inhibition of the vehicle ignition-system and/or an wireless communication of the alarm to the vehicle owner or another person, by utilizing and an antenna 23 and known standard alarm products such as an adapted GSM mobile phone (not shown), which may be incorporated in the vehicle general alarm system 22.

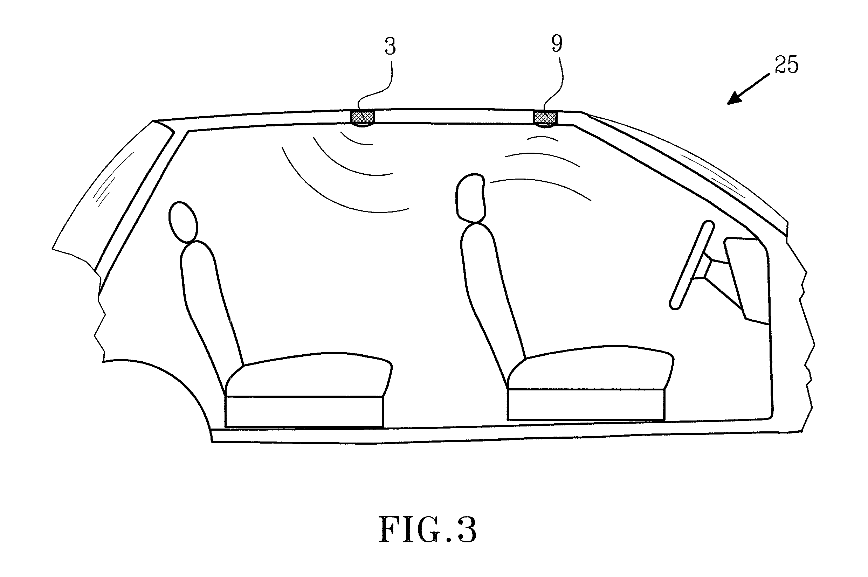

The placement of the transmitter 3 and receiver 9 in a vehicle 25 illustrated in fig 3. The transmitter 3 is located substantially centred in the ceiling, being directed to emit waves towards the back of the vehicle. The receiver 9 is located in the ceiling just above the windshield, being directed to receive waves reflected from the back of the vehicle. Of course, a different placement is possible, and the best placement depends upon the specific vehicle and the chosen transmitter/receiver.

The present invention should not be considered as being limited to the above described preferred embodiment, but rather includes all possible variations covered by the scope defined by the appended claims.

## Claims

1. A motion detector comprising
a transmitter (3), arranged to transmit waves into a defined space,
a receiver (9), arranged to receive said waves after reflection,
a detector arrangement (10, 11, 12, 13, 14, 15, 17, 18, 19), connected to said receiver (3), arranged to detect said waves after reflection,
**characterised in;**
**that** said detector arrangement (10, 11, 12, 13, 14, 15, 17, 18, 19) has at least a first separation arrangement (13, 14, 15) and a second separation arrangement (17, 18, 19), each for separating a signal (16, 20) based on changes in said waves after reflection, where each detected signal (16, 20) is representative of a specific motion type in said defined space.

2. A motion detector according to claim 1 wherein:
said waves are at least one of ultrasonic waves or microwaves.

3. A motion detector according to claim 1 wherein:
said detector arrangement comprises an envelope demodulator (12).

4. A motion detector according to claim 1 wherein:
said detector arrangement comprises at least two filter functions (14, 18), respectively separating a signal representative of a specific motion type.

5. A motion detector according to claim 4 wherein:
said filter functions are implemented as discrete components, integrated circuits or as software in the processor unit (1) or as a combination of these alternatives.

6. A motion detector according to claim 1 wherein:
said specific motion types are at least a slow motion and a fast motion.

7. A motion detector according to claim 6 wherein:
said slow motion represents movements from an occupant and said fast motion represents movements from an intruder.

8. A motion detector according to claim 1 wherein:
said defined space is the interior of a vehicle.

9. A vehicle comprising a motion detector according to any of the preceding claims.

10. A motion detecting method comprising the steps of:
- transmitting waves into a defined space,
- receiving said waves after reflection,
- detecting said waves after reflection,
- separating at least two signals (16, 20) based on changes in said waves after reflection, where each detected signal (16, 20) is representative of a specific motion type in said defined space.

11. A method according to claim 10 wherein:
said waves are at least one of ultrasonic waves or microwaves.

12. A method according to claim 10 wherein:
said detecting is performed by an envelope demodulator (12).

13. A method according to claim 10 wherein:
said separation is performed by at least two filter functions (14, 18), respectively separating a signal representative of a specific motion type.

14. A method according to claim 13 wherein:
said filter functions are implemented as discrete components, integrated circuits or as software in the processor unit (1) or as a combination of these alternatives.

15. A method according to claim 10 wherein:
said specific motion types are at least a slow motion and a fast motion.

16. A method according to claim 15 wherein:
said slow motion represents movements from an occupant and said fast motion represents movements from an intruder.

17. A method according to claim 10 wherein:
said defined space is the interior of a vehicle.
